# EUROPÄISCHE PATENTSCHRIFT

(11) **EP 1 839 834 B1**
(45) Veröffentlichungstag und Bekanntmachung des Hinweises auf die Patenterteilung: **09.09.2009**
(21) Anmeldenummer: 07005594.2
(22) Anmeldetag: 19.03.2007
(51) Int. Cl.: B29C 45/14, B29C 43/20

(54) **Verfahren zur Herstellung einer Formteils**
Method for producing a moulded part
Procédé de fabrication d'un élément moulé

(30) Priorität: 28.03.2006 DE 102006014313
(43) Veröffentlichungstag der Anmeldung: 03.10.2007
(73) Patentinhaber: Jacob Composite GmbH, 91489 Wilhelmsdorf (DE)
(72) Erfinder: Wacker, Marco, 91452 Wilhermsdorf (DE); Russ, Jörg, 90518 Altdorf (DE)
(74) Vertreter: Herrmann, Uwe

(56) Entgegenhaltungen:
- DE-A1- 10 338 109
- US-A- 5 395 580
- US-A1- 2001 046 822
- ALFRED BÖGE: "Das Techniker Handbuch" 1999, VIEWEG , WIESBADEN , XP002437230 ISBN: 3-528-34053-3 * Seite 574, Absatz 5.1 *

## Beschreibung

Die vorliegende Erfindung betrifft ein Verfahren zur Herstellung eines Formteils, das ein aus mehreren Schichten bestehendes Basisteil sowie ein damit in Verbindung stehendes thermoplastisches oder duroplastisches Kunststoffmaterial aufweist, wobei die Verbindung des Basisteils mit dem thermoplastischen oder duroplastischen Kunststoffmaterial dadurch erfolgt, dass das thermoplastische oder duroplastische Kunststoffmaterial unter einem Druck verformt wird, dass es fließfähig wird, oder bereits fließfähig unter Druck eingebracht wird und dabei oder anschließend mit dem Basisteil einen Verbund eingeht.

Aus der DE 103 38 109 ist ein Verfahren bekannt, bei dem in einem ersten Verfahrensschritt ein Verbundmaterial in eine Pressform eingelegt wird, in einem zweiten Verfahrensschritt das thermoplastische Kunststoffmaterial in Randbereichen des Verbundmaterials positioniert wird und in weiteren Verfahrensschritten sowohl das Verbundmaterial als auch das thermoplastische Kunststoffmaterial verpresst werden, wobei die Verpressung des thermoplastischen Kunststoffmaterials unter einem Druck erfolgt, unter dem das thermoplastische Kunststoffmaterial fließfähig wird.

Auf diese Weise kommt es zu einer Verbindung zwischen dem thermoplastischen Kunststoffmaterial und dem Verbundmaterial.

US 5,395,580 offenbart ein Verfahren zur Herstellung einer Fahrzeugtürverkleidung, die eine Harzschicht und ein aus drei Schichten bestehendes Außenhautteil umfaßt. Das Außenhautteil wird zunächst durch eine Aufspannvorrichtung ausgerichtet. Ein halbflüssiges Harzmaterial wird aus einer Düse eines Extruders in einen Bohrung gefüllt, damit eine vorgeschriebene Menge dieses Harzmaterials auf die Oberfläche der unteren Formhälfte verteilt wird. Danach werden die obere Formhälfte und die untere Formhälfte eingeklemmt. Das Harzmaterial wird zwischen den beiden Formhälften ausgebildet und führt dazu, dass die Harzschicht in eine gewünschte Form gebracht und mit dem Außenhautteil verbunden wird. Das Außerhautteil gemäß der US 5,395,580 wird im fertigen Zustand in die Pressform eingelegt.

In US 2001/0046822 A1 ist ein Verfahren zur Herstellung eines Harzformteils geschrieben. Das Harzformteil besteht aus einer Dekorschicht, einer gewebeartigen Schicht und einer Harzschicht. Bei dem Verfahren wird Harz für die Ausbildung des Harzteils durch eine Bohrung einer Formhälfte in eine Kavität eingespritzt, die durch beide Formhälften gebildet wird. Das Harz für die Ausbildung der Harzschicht fließt durch die Maschen der gewebeartigen Schicht und bildet eine Verbindung mit der Dekorschicht.

Es ist die Aufgabe der vorliegenden Erfindung, ein Verfahren der eingangs genannten Art dahingehend weiterzubilden, dass dieses besonders einfach durchgeführt werden kann.

Diese Aufgabe wird durch ein Verfahren mit den Merkmalen des Anspruchs 1 gelöst.

Danach ist vorgesehen, dass die Herstellung des Basisteils und die Herstellung des Verbundes des thermoplastischen oder duroplastischen Kunststoffmaterials mit dem Basisteil in demselben Formwerkzeug durchgeführt wird. Auf diese Weise ist nur unter Verwendung eines Formwerkzeuges sowohl die Herstellung des Basisteils als auch dessen Verbindung mit dem thermoplastischen oder duroplastischen Kunststoffmaterial realisierbar. Eine eigens vorgesehene Vorrichtung zur Herstellung des Basisteils ist somit erfindungsgemäß überflüssig.

Erfindungsgemäß ist vorgesehen, dass in einem Verfahrensschritt wenigstens zwei Schichten des Basisteils in das Formwerkzeug eingelegt und dann verformt werden, so dass eine Verbindung zwischen diesen Schichten gebildet wird und dass in einem weiteren Verfahrensschritt das thermoplastische oder duroplastische Kunststoffmaterial eingelegt wird und anschließend unter dem genannten hohen Druck derart verformt wird, dass das thermoplastische oder duroplastische Kunststoffmaterial fließfähig wird und dabei oder sodann mit dem Basisteil bzw. mit dessen Schichten verbunden wird. Denkbar ist ebenfalls, dass das thermoplatische oder duroplastische Kunststoffmaterial bereits fließfähig unter Druck in das Formwerkzeug eingespritzt wird und dabei oder sodann mit dem Basisteil bzw. dessen Schichten eine Verbindung eingeht.

Erfindungsgemäß kann vorgesehen sein, dass das thermoplastische oder duroplastische Kunststoffmaterial einen zunächst geometrisch beschränkten Bereich oder Randbereich des Formteils bildet, an den z. B. Haken, Ösen, Laschen oder andere Elemente angeordnet sein können, mittels dessen das fertige Formteil in geeigneter Weise befestigt oder arretiert werden kann.

Die Anzahl der Schichten, aus denen das Basisteil besteht, ist weitgehend beliebig. Beispielsweise ist denkbar, dass es sich bei dem Basisteil um ein Verbundmaterial handelt, das aus einer Kernschicht besteht, die wabenförmig oder zellenförmig ausgeführt sein kann und dass auf beiden Seiten dieser Kernschicht eine Deckschicht angeordnet ist, die die Kernschicht oben und unten bedeckt.

Denkbar ist grundsätzlich, dass die Erfindung in einem Formwerkzeug durchgeführt wird, das unterschiedliche Stempel aufweist, mittels derer unterschiedliche Drücke aufgebracht werden können. So ist beispielsweise denkbar, dass ein erster Stempel vorgesehen ist, der auf das beispielsweise als Verbundmaterial ausgeführte Basisteil einwirkt und ein zweiter Stempel vorgesehen ist, der auf das thermoplastische oder duroplastische Kunststoffmaterial einwirkt. Denkbar ist beispielsweise, dass der auf das thermoplastische oder duroplastische Kunststoffmaterial einwirkende Stempel so lange nicht eingesetzt wird, bis alle Schichten des Basisteils miteinander verbunden sind und erst dann zum Einsatz kommt, wobei - wie oben ausgeführt - das thermoplastische oder duroplastische Kunststoffmaterial dann unter einem Druck verformt wird, der zu einem Fließen dieses Materials führt, so dass es mit dem Basisteil eine innige Verbindung eingeht.

Alternativ dazu kann auch vorgesehen sein, dass das thermoplastische oder duroplastische Kunststoffmaterial nicht erst durch den Druck im Formwerkzeug zum Fließen gebracht wird, sondern bereits im flüssigen oder zumindest fließfähigen Zustand in das Formwerkzeug eingebracht, vorzugsweise unter Druck eingespritzt, wird.

In weiterer Ausgestaltung der Erfindung ist vorgesehen, dass, wie oben ausgeführt, das Basisteil bzw. das Verbundmaterial wenigstens eine Schicht aufweist, die eine zellen- oder wabenförmige Struktur aufweist. Eine solche Kernstruktur ist jedoch kein zwingendes, sondern ein optionales Merkmal des Basisteils bzw. des Verbundmaterials.

Wie oben ausgeführt, kann es sich bei dem Basisteil um ein Verbundmaterial handeln. Dies ist jedoch nicht zwingend. Das Basisteil kann beispielsweise auch aus thermoplastischer oder duroplastischer Plattenware ausgeführt sein, die verstärkt oder unverstärkt ausgeführt sein kann.

In weiterer Ausgestaltung der Erfindung ist vorgesehen, dass wenigstens eine der Schichten des Basisteils ihrerseits einen ein- oder mehrschichtigen Aufbau aufweist. Die Schichten des Basisteils können dabei beispielsweise aus einem ein- oder mehrlagigen Verbundmaterial oder auch aus anderen Materialien, wie beispielsweise einem thermoplastischen oder duroplastischen Kunststoff bestehen.

Wenigstens eine der Schichten des Basisteils kann beispielsweise somit durch ein Verbundmaterial oder auch durch ein thermoplastisches oder duroplastisches Material gebildet werden.

In weiterer Ausgestaltung der Erfindung ist vorgesehen, dass eine, mehrere oder alle Schichten des Verbundbauteils vor dem Verformen in dem Formwerkzeug vorgewärmt werden.

Eine derartige Vorwärmung kann dadurch erfolgen, dass die betreffenden Schichten beispielsweise durch lR-Strahlung, Mikrowelle, Laser oder durch Um- bzw. Heißluft oder durch eine Kombination dieser Verfahren auf die gewünschte Temperatur aufgewärmt werden. Denkbar ist beispielsweise, dass die oberhalb und/oder unterhalb der Kernschicht befindlichen Schichten mit Heißluft angeblasen werden, so dass sie die gewünschte Temperatur aufweisen. Ferner ist denkbar, dass die Schichten in einem Umluftofen, durch IR-Strahlung oder durch weitere Maßnahmen auf die gewünschte Temperatur erhitzt werden. Entsprechendes gilt selbstverständlich auch für eine etwaige Kernschicht oder eine wabenförmige Struktur. Auch diese Schichten können vor der Herstellung des Basisteils bzw. des Verbundmaterials aufgewärmt werden.

Das Basisteil kann beispielsweise durch das Verfahren des Twin-Sheet-Moldings hergestellt werden. Dieses auch als Twin-Sheet-Forming bekannte Verfahren wird unter Verwendung zweier Formwerkzeughälften durchgeführt, in die die vorgewärmten Schichten eingeführt werden, wobei die Schichten möglichst vollständig an dem Formwerkzeug anliegen. Sodann werden die Schichten z. B. in der gewünschten Weise miteinander verbunden, um beispielsweise ein hohl ausgeführtes Basisteil zu bilden.

Auch ist es denkbar, das Basisteil durch das Verfahren des Vakuumformens herzustellen. Mittels des Vakuums wird ein besonders gutes Anliegen der Schichten des Basisteils an dem Formwerkzeug erreicht.

In weiterer Ausgestaltung der Erfindung ist vorgesehen, dass zwischen den beiden Schichten des Basisteils Druck aufgebracht wird, was ebenfalls den Vorteil hat, dass die Schichten möglichst gut an dem Formwerkzeug anliegen. Der Druck kann beispielsweise mittels eines geeigneten Gases aufgebracht werden. Ebenfalls besteht die Möglichkeit, zwischen zwei Schichten des Basisteils einen Schaum einzubringen, beispielsweise einen Bauschaum, der nach einer gewissen Zeit aushärtet, oder einen thermoplastischen Schaum, der auskristallisiert. Dadurch kann beispielsweise ein ausgeschäumtes Twin-Sheet-Teil gefertigt werden, das sich beispielsweise durch eine gute thermische oder akustische Isolation auszeichnet und darüber hinaus eine sehr gute Stabilität aufweist.

In weiterer Ausgestaltung der Erfindung ist vorgesehen, dass das Basisteil durch das Verfahren des Matched-Die-Molding hergestellt wird. Auf diese Weise lassen sich insbesondere Verbundbauteile in vorteilhafter Weise herstellen.

In einer weiteren Ausgestaltung der Erfindung ist vorgesehen, dass eine, mehrere oder alle Schichten des Basisteils beim Einbringen in das Formwerkzeug in einem oder mehreren Rahmen fixiert werden. Die Fixierung dieser Schichten im Rahmen wird gelöst, sobald die entsprechende Schicht mit den weiteren Schichten des Basisteils verformt ist.

Denkbar ist es beispielsweise, zwei Rahmen einzusetzen, von denen einer die oberhalb einer Kernschicht des Verbundmaterials aufzubringende Schicht und ein anderer die unterhalb der Kernschicht aufzubringende Schicht fixiert.

Allerdings besteht grundsätzlich ein Nachteil darin, dass bei Anwendung eines derartigen Rahmens unter Umständen mit einem Verschnitt zu rechnen ist, der unerwünscht ist.

Zur Vermeidung des Verschnittes kann beispielsweise vorgesehen sein, dass vorzugsweise zwei parallel angeordnete Halterahmen die obere und untere Schicht des Basisteils bzw. des Verbundmaterials vor dem Formen fixieren und derart nachführen, dass die Haltebereiche anschließend mit thermoplastischem oder duroplastischem Kunststoffmaterial umformt bzw. angespritzt werden. Diese Vorgehensweise ist grundsätzlich auch bei nur einer Schicht oder mehr als zwei Schichten anwendbar.

Um bei den Haltebereichen, die kühler sind als die weiteren Bereiche der Schichten, dennoch eine ausreichende Verbindung zum thermoplastischen oder duroplastischen Kunststoffmaterial zu erzielen, kann vorgesehen sein, dass die Halterbereiche einen oder mehrere Durchbrüche aufweisen, in die das thermoplastische oder duroplastische Kunststoffmaterial eindringen kann, so dass in diesen Abschnitten zumindest eine formschlüssige Verbindung zwischen dem thermoplastischen oder duroplastischen Kunststoffmaterial und der oder den Schichten des Basisteils erhalten wird.

Um den Nachteil des Verschnittes zu beheben, kann ferner vorgesehen sein, dass eine, mehrere oder alle Schichten des Basisteils beim Einbringen in das Formwerkzeug auf eine Gewebestruktur oder auf mehrere Stränge, insbesondere auf Faserstränge aufgelegt werden. Der Einsatz eines genannten, die Schichten fixierenden Rahmens ist dabei nicht erforderlich. Der Verschnitt des Schichtwerkstoffes lässt sich auf diese Weise minimieren. Die Gewebestruktur bzw. die Stränge verbleiben vorzugsweise am Basisteil und bilden somit einen Bestandteil des fertigen Formteils. Vorzugsweise ist vorgesehen, dass das Gewebe oder die Stränge derart ausgeführt sind, dass sie die mechanischen Eigenschaften des fertigen Formteils steigern bzw. zur Festigkeit beitragen.

Bei dem Gewebe bzw. den Strängen kann es sich beispielsweise um eine Gewebestruktur bzw. Stränge aus Glasfasern, Metallfasern oder Kunststoff wie beispielsweise PTFE handeln.

Die Gewebestruktur bzw. die Stränge können zum Zwecke der Haftverbesserung vorbehandelt sein bzw. werden. Denkbar ist es beispielsweise, diese vorzusputtern, um die Haftung zu verbessern.

Auch ist der Einsatz einer Schlichte als Haftvermittler ist denkbar.

In weiterer Ausgestaltung der Erfindung ist vorgesehen, dass die Gewebestruktur oder die Stränge nach dem Commingling-Verfahren hergestellt sind oder werden. Mit diesem Verfahren lassen sich Mischungen von Verstärkungs- und Matrixsträngen mit einstellbarem Faser-Volumen-Verhältnis im Werkstoffverbund herstellen. Denkbar ist beispielsweise, dass die Matrixfilamente durch thermoplastische oder duroplastische Fasern gebildet werden.

In weiterer Ausgestaltung der Erfindung ist vorgesehen, dass das Basismaterial auf Nadeln fixiert und dann transportiert wird.

In weiterer Ausgestaltung der Erfindung ist vorgesehen, dass das Verbundmaterial wenigstens eine Schicht aufweist, die eine zellen- oder wabenförmige Struktur aufweist und dass das Verformen dieser Schicht mit weiteren Schichten des Verbundbauteils unter einem Druck von maximal 50 bar, vorzugsweise von 20 bis 30 bar erfolgt. Dieser vergleichsweise geringe Druck ist erforderlich, um die zellen- oder wabenförmige Struktur beim Verformen nicht zu zerstören, sondern deren Anordnung zu erhalten.

Im Gegensatz dazu kann vorgesehen sein, dass das Verformen des thermoplastischen oder duroplastischen Kunststoffes unter einem Druck von maximal 250 bar erfolgt. Bei derartigen Drucken kommt es wie oben ausgeführt zu einer plastischen Verformung bzw. zu einem Fließen des thermoplastischen oder duroplastischen Kunststoffes, woraufhin dieser mit dem angrenzenden Verbundmaterial eine belastbare Verbindung eingeht.

Wie oben ausgeführt, ist es nicht zwingend erforderlich, die genannten hohen Drücke aufzubringen, um den Kunststoff zum Fließen zu bringen. Vielmehr besteht auch die Möglichkeit, diesen bereits im fließfähigen Zustand vorzugsweise unter Druck in das Formwerkzeug einzubringen.

Bei den Schichten des Basisteils kann es sich um Polyamid, Polybutylenterephthalat, Polyethylen oder Polypropylen handeln oder auch um Hochtemperatur-Thermoplaste, wie PPS (Polyphenylensulfid) oder PEI (Polyetherimid). Auch der Einsatz von thermoplastischen Elastomeren (TPEs) ist möglich.

Weiterhin kann vorgesehen sein, dass die Schichten des Basisteils verstärkt sind. In Betracht kommen z.B. eine Glasfaser-, Kohlenstofffaser-, Naturfaser-, Aramidfaser-, Metallfaser und/oder Kunststofffaserverstärkung.

Auch ist denkbar, dass die Schichten des Basisteils eigenverstärkte Polymere aufweisen oder aus diesen bestehen. Als Beispiele sind Curv^{®} und PURE^{®} zu nennen.

ln einer weiteren Ausgestaltung der Erfindung kann schließlich vorgesehen sein, dass das Verbundmaterial wenigstens eine Schicht aufweist, die eine zellen- oder wabenförmige Struktur aufweist, wobei diese Schicht aus den Materialien gemäß einem der Ansprüche 24 - 26 oder aus Papier, Pappe oder Metall, insbesondere aus Aluminium besteht.

Um ein Eindringen von thermoplastischem oder duroplastischem Kunststoffmaterial in das Basisteil, insbesondere in eine etwaige waben- oder zellenartige Kernschicht eines Verbundmaterials zu verhindern, kann vorgesehen sein, dass die mehreren Schichten des Basisteils durch das Formwerkzeug derart verformt werden, dass kein thermoplastisches oder duroplastisches Kunststoffmaterial in das Basisteil flie-βen kann. Die Trennung zwischen den Stempeln kann somit über die Schichten des Basisteils abgedeckt sein. Grundsätzlich ist ebenfalls denkbar, an dem oder den Stempeln einen Vorsprung anzuordnen, der eine entsprechende Vertiefung in dem Basisteil erzeugt, durch die das Einfließen des thermoplastischen oder duroplastischen Materials in das Basisteil verhindert wird.

In weiterer Ausgestaltung der Erfindung ist vorgesehen, dass eine, mehrere oder alle Schichten des Basisteils wenigstens einen Haltebereich aufweisen, in dem die Schichten durch Rahmen oder eine sonstige Halteeinrichtung fixiert werden, wobei die Haltebereiche derart nachgeführt werden, dass sie mit dem thermoplastischen oder duroplastischen Kunststoffmaterial umformt werden.

Besonders vorteilhaft ist es, wenn der oder die Haltebereiche einen oder mehrere Durchbrüche aufweisen, in die das thermoplastische oder duroplastische Kunststoffmaterial zum Zwecke der Herstellung einer formschlüssigen Verbindung eindringt. Die Haltebereiche sind aufgrund ihres Kontaktes mit der Halteeinrichtung kühler als die sonstigen Bereiche des Basisteils, so dass gemäß dieser Ausführungsform der Erfindung zur Stabilisierung der Verbindung in diesen Bereichen ein formschlüssiger Verbund zwischen thermoplastischem oder duroplastischem Material und dem Basisteil vorgesehen ist.

Die Erfindung betrifft ferner ein Formteil, das nach dem erfindungsgemäßen Verfahren hergestellt worden ist.

Weitere Einzelheiten und Vorteile der Erfindung werden anhand eines im Folgenden dargestellten Ausführungsbeispiels näher erläutert.

Das Ausführungsbeispiel betrifft die Herstellung eines Verbundmaterials, das aus einer wabenförmigen Kernschicht und zwei Deckschichten besteht, die auf der Oberseite und der Unterseite der Kernschicht angebracht werden soll.

Dazu ist vorgesehen, dass zunächst die wabenförmige Kernschicht mit einer der Werkzeughälften des Formwerkzeuges verbunden werden, das die erste Deckschicht mittels eines Rahmens zwischen den beiden Formhälften des Formwerkzeuges fixiert wird und die Formhälften sodann zusammengefahren werden, so dass die wabenförmige Kernstruktur mit dieser Deckschicht eine innige Verbindung eingeht.

Anschließend werden die Formhälften wieder geöffnet und es wird auf der anderen Seite der Kernschicht mittels eines Rahmens eine zweite Deckschicht zwischen die offenen Formhälften eingeführt. Sodann werden die Formhälften wieder geschlossen und es kommt zu einer Verbindung der wabenförmigen Kernschicht mit dieser zweiten Deckschicht.

Während dieses Vorganges oder auch im Anschluß daran kann vorgesehen sein, dass ein Randmaterial aus thermoplastischem Kunststoff in das Formwerkzeug eingelegt wird. Um dieses zu verformen, ist vorgesehen, dass das Formwerkzeug einen weiteren Stempel aufweist, der unter einem Druck von ca. 200 bis 250 bar arbeitet. Durch Betätigen dieses äußeren Stempels wird das thermoplastische oder duroplastische Kunststoffmaterial in einem fließfähigen Zustand verbracht, woraufhin es sich mit dem Randbereich des bereits hergestellten Verbundmaterials verbindet.

Die Deckschichten können aus einem thermoplastischen oder duroplastischen Kunststoffmaterial bestehen. Grundsätzlich ist der Einsatz von Polyamid, Polybutylenterephthalat PE oder PP oder auch von Hochtemperatur-Thermoplasten, wie PPS oder PEI oder von TPEs denkbar. Diese Kunststoffe können auch glasfaserverstärkt oder in anderer Weise verstärkt sein.

Als Material für die wabenförmige Kernschicht kommen grundsätzlich die gleichen Materialien wie die für die Deckschichten in Frage. Alternativ oder zusätzlich kann auch Papier, Pappe, Aluminium eingesetzt werden.

Um eine innige Verbindung der Schichten untereinander zu bewirken, kann vorgesehen sein, dass diese vorgewärmt werden. Beispielsweise kann die wabenförmige Kernschicht mittels aufgeblasener Heißluft erwärmt werden. Auch die Deckschichten können vor ihrer Verformung mit der wabenförmigen Kernschicht aufgeheizt werden. Denkbar ist beispielsweise die Aufwärmung durch IR-Strahlung, einen Umluftofen oder eine Kombination dieser Verfahren, wobei die Temperatur anhängig vom Kunststoff bei ca. 260°C bis 400°C liegen kann.

Um die wabenförmige Struktur während des Verformens bzw. während der Herstellung des Verbundmaterials nicht zu zerstören, ist vorgesehen, dass das der innere Stempel des Formwerkzeuges bei einem Druck bis ca. 30 bar arbeitet. Demgegenüber ist vorgesehen, dass der äußere Stempel, der auf das thermoplastische oder duroplastische Kunststoffmaterial einwirkt, bei Drücken im Bereich zwischen 200 bar und 250 bar arbeitet.

Das Formwerkzeug kann somit zwei Stempel aufweisen, die vorzugsweise unabhängig voneinander betätigt werden können und die unterschiedliche Drücke aufbringen können.

Alternativ zu der Vorgehensweise, die einzelnen Schichten des Verbundmaterials in einem Rahmen zu fixieren, kann vorgesehen sein, das Verbundmaterial bzw. dessen Schichten auf einer Gewebestruktur anzuordnen, bei der es sich beispielsweise um Glas, Metall, PTFE etc. handeln kann. Eine derartige Anordnung ermöglicht es, den Verschnitt zu vermeiden, der beim Einsatz eines Halterahmens für die Schichten des Verbundmaterials entstehen kann.

Weiterhin kann vorgesehen sein, dass zwei parallel angeordnete Halterahmen die obere und untere Schicht des Verbundmaterials vor dem Formen fixieren und derart nachführen, dass die Haltbereiche anschließend mit dem thermoplastischen oder duroplastischen Material umformt werden, damit ein Verschnitt vermieden werden kann.

Um bei den kühleren Haltebereichen dennoch eine ausreichende Verbindung zum thermoplastischen oder duroplastischen Material zu gewährleisten, kann vorgesehen werden, dass diese mit Durchbrüchen versehen sind, um eine formschlüssige Verbindung auszubilden.

## Patentansprüche

1. Verfahren zur Herstellung eines Formteils, das ein aus mehreren Schichten bestehendes Basisteil sowie ein damit in Verbindung stehendes thermoplastisches oder duroplastisches Kunststoffmaterial aufweist, wobei die Verbindung des Basisteils mit dem thermoplastischen oder mit dem duroplastischen Kunststoffmaterial dadurch erfolgt, dass das thermoplastische oder duroplastische Kunststoffmaterial unter einem Druck verformt wird, dass es fließfähig wird oder bereits verflüssigt unter Druck eingebracht wird und mit dem Basisteil einen Verbund eingeht, wobei die Herstellung des Basisteils und die Verbindung des thermoplastischen oder duroplastischen Kunststoffmaterials mit dem Basisteil in demselben Formwerkzeug durchgeführt wird,
**dadurch gekennzeichnet,**
**dass** in einem Verfahrensschritt wenigstens zwei Schichten des Basisteils in ein Formwerkzeug eingelegt und darin verformt werden, so dass eine Verbindung zwischen diesen Schichten gebildet wird und
**dass** in einem weiteren anschließenden Verfahrensschritt das thermoplastische oder duroplastische Kunststoffmaterial in das Formwerkzeug eingelegt wird und anschließend unter einem Druck verformt wird, so dass es fließfähig wird und mit Schichten des Basisteils verbunden wird, oder das thermoplastische oder duroplastische Kunststoffmaterial in das Formwerkzeug bereits verflüssigt vorzugsweise unter Druck eingebracht wird und sodann mit dem Basisteil einen Verbund eingeht.

2. Verfahren nach Anspruch 1, **dadurch gekennzeichnet, dass** es sich bei dem Basisteil um ein Verbundmaterial handelt.

3. Verfahren nach Anspruch 1 oder 2, **dadurch gekennzeichnet, dass** wenigstens eine der Schichten des Basisteils ihrerseits einen ein- oder mehrschichtigen Aufbau aufweist.

4. Verfahren nach einem der vorhergehenden Ansprüche, **dadurch gekennzeichnet, dass** wenigstens eine der Schichten des Basisteils durch ein Verbundmaterial oder durch ein thermoplastisches oder duroplastisches Material gebildet wird.

5. Verfahren nach einem der vorhergehenden Ansprüche, **dadurch gekennzeichnet, dass** das Basisteil wenigstens eine Schicht aufweist, die eine zellen- oder wabenförmige Struktur aufweist.

6. Verfahren nach einem der vorhergehenden Ansprüche, **dadurch gekennzeichnet, dass** eine, mehrere oder alle Schichten des Basisteils vor dem Verformen in dem Formwerkzeug vorgewärmt werden.

7. Verfahren nach Anspruch 6, **dadurch gekennzeichnet, dass** die Vorwärmung durch Einwirkung von IR-Strahlung, Mikrowellen, Laser oder Heißluft oder eine Kombination beider Verfahren auf die Schichten des Basisteils erzielt wird.

8. Verfahren nach einem der vorhergehenden Ansprüche, **dadurch gekennzeichnet, dass** das Basisteil durch das Verfahrens des Twin-Sheet-Moldings hergestellt wird.

9. Verfahren nach einem der vorhergehenden Ansprüche, **dadurch gekennzeichnet, dass** das Basisteil durch das Verfahren des Vakuumformens hergestellt wird.

10. Verfahren nach einem der vorhergehenden Ansprüche, **dadurch gekennzeichnet, dass** zwischen zwei Schichten des Basisteils während dessen Herstellung Druck aufgebracht wird.

11. Verfahren nach einem der vorhergehenden Ansprüche, **dadurch gekennzeichnet, dass** zwischen zwei Schichten des Basisteils während oder nach dessen Herstellung ein Schaum eingebracht wird.

12. Verfahren nach einem der vorhergehenden Ansprüche, **dadurch gekennzeichnet, dass** das Basisteil durch das Verfahren des matched-die-molding hergestellt wird.

13. Verfahren nach einem der vorhergehenden Ansprüche, **dadurch gekennzeichnet, dass** eine, mehrere oder alle Schichten des Basisteils beim Einbringen in das Formwerkzeug in einem oder mehreren Rahmen fixiert werden.

14. Verfahren nach einem der vorhergehenden Ansprüche, **dadurch gekennzeichnet, dass** eine, mehrere oder alle Schichten des Basisteils beim Einbringen in das Formwerkzeug auf einer Gewebestruktur oder auf mehrere Stränge, insbesondere auf Faserstränge aufgelegt werden.

15. Verfahren nach Anspruch 14, **dadurch gekennzeichnet, dass** die Gewebestruktur oder die Stränge aus Glasfasern, Metallfasern oder Kunststofffasern, insbesondere aus PTFE bestehen.

16. Verfahren nach Anspruch 14 oder 15, **dadurch gekennzeichnet, dass** die Gewebestruktur oder die Stränge zum Zwecke der Haftverbesserung vorbehandelt sind oder werden.

17. Verfahren nach einem der Ansprüche 14 bis 16, **dadurch gekennzeichnet, dass** die Gewebestruktur oder die Stränge nach dem Commingling-Verfahren hergestellt sind oder werden.

18. Verfahren nach einem der vorhergehenden Ansprüche, **dadurch gekennzeichnet, dass** eine, mehrere oder alle Schichten des Basisteils vor oder beim Einbringen in das Formwerkzeug mittels Nadeln fixiert und transportiert werden.

19. Verfahren nach einem der vorhergehenden Ansprüche, **dadurch gekennzeichnet, dass** es sich bei dem Basisteil um ein Verbundmaterial handelt, das wenigstens eine Schicht aufweist, die eine zellen- oder wabenförmige Struktur aufweist und dass das Verformen dieser Schicht mit weiteren Schichten des Verbundbauteils unter einem Druck von maximal 50 bar, vorzugsweise von 20 bar bis 30 bar erfolgt.

20. Verfahren nach einem der vorhergehenden Ansprüche, **dadurch gekennzeichnet, dass** das Verformen des thermoplastischen oder duroplastischen Kunststoffes unter einem Druck von maximal 250 bar erfolgt.

21. Verfahren nach einem der vorhergehenden Ansprüche, **dadurch gekennzeichnet, dass** die Schichten des Basisteils aus Polyamid, Polybutylenterephthalat, Polyethylen oder Polypropylen oder aus Hochtemperatur-Thermoplasten, wie PPS (Polyphenylensulfid) oder PEI (Polyetherimid), oder aus thermoplastischen Elastomeren (TPEs) bestehen.

22. Verfahren nach einem der vorhergehenden Ansprüche, **dadurch gekennzeichnet, dass** die Schichten des Basisteils glasfaser-, kohlenstofffaser-, naturfaser-, aramidfaser-, metallfaser und/oder kunststofffaserverstärkt sind.

23. Verfahren nach einem der vorhergehenden Ansprüche, **dadurch gekennzeichnet, dass** die Schichten des Basisteils eigenverstärkte Polymere aufweisen oder aus diesen bestehen.

24. Verfahren nach einem der vorhergehenden Ansprüche, **dadurch gekennzeichnet, dass** es sich bei dem Basisteil um ein Verbundmaterial handelt, das wenigstens eine Schicht aufweist, die eine zellen- oder wabenförmige Struktur aufweist, wobei diese Schicht aus den Materialien gemäß den Ansprüchen 21 - 23 oder aus Papier, Pappe oder Metall, insbesondere Aluminium besteht.

25. Verfahren nach einem der vorhergehenden Ansprüche, **dadurch gekennzeichnet, dass** die mehreren Schichten des Basisteils durch das Formwerkzeug derart verformt werden, dass die Trennung zwischen den Stempeln des Formwerkzeuges durch die Schichten des Basisteils abgedeckt ist, so dass kein thermoplastisches oder duroplastisches Kunststoffmaterial in das Basisteil fließen kann.

26. Verfahren nach einem der vorhergehenden Ansprüche, **dadurch gekennzeichnet, dass** eine, mehrere oder alle Schichten des Basisteils wenigstens einen Haltebereich aufweisen, in dem die Schichten durch Rahmen oder eine sonstige Halteeinrichtung fixiert werden, wobei die Haltebereiche derart nachgeführt werden, dass sie mit dem thermoplastischen oder duroplastischen Kunststoffmaterial umformt werden.

27. Verfahren nach Anspruch 26, **dadurch gekennzeichnet, dass** der oder die Haltebereiche einen oder mehrere Durchbrüche aufweisen, in die das thermoplastische oder duroplastische Kunststoffmaterial zum Zwecke der Herstellung einer formschlüssigen Verbindung eindringt.

## Claims

1. A method for the production of a moulded part which has a base part comprising a plurality of layers and a thermoplastic or thermosetting plastic material connected thereto, wherein the connection of the base part to the thermoplastic or thermosetting plastic material takes place in that the thermoplastic or thermosetting plastic material is deformed under a pressure, in that it becomes flowable or is introduced already liquefied under pressure and enters into a bond with the base part, wherein the production of the base part and the connection of the thermoplastic or thermosetting plastic material to the base part is carried out in the same moulding tool,
**characterised in that**
in a method step, at least two layers of the base part are inserted into a moulding tool and deformed therein so that a connection is created between these layers; and
in a further subsequent method step, the thermoplastic or thermosetting plastic material is inserted into the moulding tool and is subsequently deformed under a pressure so that it becomes flowable and is connected to layers of the base part or the thermoplastic or thermosetting is inserted into the moulding tool already liquefied and preferably under pressure and then enters into a bond with the base part.

2. A method in accordance with claim 1, **characterised in that** the base part is a composite material.

3. A method in accordance with either of claims 1 or 2, **characterised in that** at least one of the layers of the base part in turn has a single-layer structure or a multi-layer structure.

4. A method in accordance with one of the preceding claims, **characterised in that** at least one of the layers of the base part is formed by a composite material or by a thermoplastic or thermosetting material.

5. A method in accordance with one of the preceding claims, **characterised in that** the base part has at least one layer which has a cellular or honeycomb structure.

6. A method in accordance with one of the preceding claims, **characterised in that** one layer, a plurality of layers, or all layers of the base part are preheated in the moulding tool prior to deforming.

7. A method in accordance with claim 6, **characterised in that** the preheating is achieved by the effect of IR radiation, microwaves, laser or hot air, or by a combination of both methods on the layers of the base part.

8. A method in accordance with one of the preceding claims, **characterised in that** the base part is produced by the twin-sheet moulding method.

9. A method in accordance with one of the preceding claims, **characterised in that** the base part is produced by the vacuum moulding method.

10. A method in accordance with one of the preceding claims, **characterised in that** pressure is applied between two layers of the base part during its production.

11. A method in accordance with one of the preceding claims, **characterised in that** a foam is introduced between two layers of the base part during or after its production.

12. A method in accordance with claim 1, **characterised in that** the base part is produced by the matched-die moulding method.

13. A method in accordance with one of the preceding claims, **characterised in that** one layer, a plurality of layers, or all layers of the base part are fixed in one or more frames on the introduction into the moulding tool.

14. A method in accordance with one of the preceding claims, **characterised in that** one layer, a plurality of layers, or all layers of the base part are placed onto a fabric structure or onto a plurality of strands, especially onto fibre strands, on introduction into the moulding tool.

15. A method in accordance with claim 14, **characterised in that** the fabric structure or the strands are composed of glass fibres, metal fibres or plastic fibres, in particular of PTFE.

16. A method in accordance with claim 14 or claim 15, **characterised in that** the fabric structure or the strands are or will be pretreated for the purpose of improving adhesion.

17. A method in accordance with one of the claims 14 to 16, **characterised in that** the fabric structure or the strands are or will be produced in accordance with the commingling method.

18. A method in accordance with one of the preceding claims, **characterised in that,** before or on the introduction into the moulding tool, one layer, a plurality of layers, or all layers of the base part are fixed by means of needles and are transported.

19. A method in accordance with one of the preceding claims, **characterised in that** the base part is a composite material which has at least one layer which has a cellular or honeycomb structure; and **in that** the deformation of this layer with further layers of the composite component takes part at a pressure of 50 bar maximum, preferably from 20 bar to 30 bar.

20. A method in accordance with claim 1, **characterised in that** the thermoplastic or thermosetting plastic material is deformed at a pressure of 250 bar maximum.

21. A method in accordance with one of the preceding claims, **characterised in that** the layers of the base part are composed of polyamide, polybutylene terephthalate, polyethylene or polypropylene or of high-temperature thermoplastics such as PPS (polyphenylene sulphide) or PEI (polyetherimide), or of thermoplastic elastomers (TPEs).

22. A method in accordance with one of the preceding claims, **characterised in that** the layers of the base part are reinforced by glass fibres, carbon fibres, natural fibres, aramide fibres, metallic fibres and/or synthetic fibres.

23. A method in accordance with one of the preceding claims, **characterised in that** the layers of the base part have or comprise inherently reinforced polymers.

24. A method in accordance with one of the preceding claims, **characterised in that** the base part is a composite material which has at least one layer which has a cellular or honeycomb structure, with this layer comprising the materials in accordance with claims 21 - 23 or paper, cardboard or metal, in particular aluminium.

25. A method in accordance with one of the preceding claims, **characterised in that** the plurality of layers of the base part are deformed by the moulding tool such that the separation between the stamps of the moulding tool is covered by the layers of the base part so that no thermoplastic or thermosetting plastic material can flow into the base part.

26. A method in accordance with one of the preceding claims, **characterised in that** one layer, a plurality of layers, or all layers of the base part have at least one holding region in which the layers are fixed by frames or by another holding device, with the holding regions being tracked such that they are reshaped with the thermoplastic or thermosetting plastic material.

27. A method in accordance with claim 26, **characterised in that** the holding region(s) have one or more openings into which the thermoplastic or thermosetting plastic material penetrates for the purpose of producing a shape-matched connection.

## Revendications

1. Procédé de fabrication d'un élément moulé, présentant un élément de base composé de plusieurs couches ainsi qu'une matière synthétique thermoplastique ou duroplastique se trouvant en liaison avec celui-ci, sachant que la liaison de l'élément de base avec la matière synthétique thermoplastique ou duroplastique s'effectue en ce que la matière synthétique thermoplastique ou duroplastique est façonnée sous une pression, en ce qu'elle devient fluide ou qu'elle est chargée sous pression à l'état déjà liquéfié et qu'elle compose une association avec l'élément de base, sachant que la fabrication de l'élément de base et la liaison de la matière synthétique thermoplastique ou duroplastique avec l'élément de base est effectuée dans le même outil de formage,
**caractérisé,**
**en ce que** dans une étape de procédé, au moins deux couches de l'élément de base sont placées dans un outil de formage et façonnées dans celui-ci, de sorte qu'une liaison soit constituée entre ces couches et
**en ce que** dans une autre étape de procédé ultérieure, la matière synthétique thermoplastique ou duroplastique est placée dans l'outil de formage puis façonnée ensuite à une pression de manière à ce qu'elle devienne fluide et soit reliée avec les couches de l'élément de base ou en ce que la matière synthétique thermoplastique ou duroplastique soit chargée de préférence sous pression et à l'état déjà liquéfié dans l'outil de formage, et qu'elle compose alors une association avec l'élément de base.

2. Procédé selon la revendication 1, **caractérisé en ce que** dans le cas de l'élément de base, il s'agit d'une matière composite.

3. Procédé selon la revendication 1 ou 2, **caractérisé en ce qu'**au moins une des couches de l'élément de base présente pour sa part une structure monocouche ou à plusieurs couches.

4. Procédé selon l'une des revendications précédentes, **caractérisé en ce qu'**au moins une des couches de l'élément de base est constituée par une matière composite ou par une matière thermoplastique ou duroplastique.

5. Procédé selon l'une des revendications précédentes, **caractérisé en ce que** l'élément de base présente au moins une couche présentant une structure réticulaire ou alvéolaire.

6. Procédé selon l'une des revendications précédentes, **caractérisé en ce qu'**une, plusieurs ou toutes les couches de l'élément de base sont préchauffées avant le façonnage dans l'outil de formage.

7. Procédé selon la revendication 6, **caractérisé en ce que** le préchauffage est obtenu par l'action de rayons IR, de micro-ondes, de laser ou d'air chaud, ou bien d'une combinaison des deux procédés sur les couches de l'élément de base.

8. Procédé selon l'une des revendications précédentes, **caractérisé en ce que** l'élément de base est fabriqué selon le procédé du soufflage TSBM (Twin-Sheet-Molding).

9. Procédé selon l'une des revendications précédentes, **caractérisé en ce que** l'élément de base est fabriqué selon le procédé du thermoformage sous vide.

10. Procédé selon l'une des revendications précédentes, **caractérisé en ce qu'**entre deux couches de l'élément de base, de la pression est appliquée pendant la fabrication de celui-ci.

11. Procédé selon l'une des revendications précédentes, **caractérisé en ce qu'**entre deux couches de l'élément de base, une mousse est appliquée pendant ou après la fabrication de celui-ci.

12. Procédé selon l'une des revendications précédentes, **caractérisé en ce que** l'élément de base est fabriqué selon le procédé de coulée sous pression (matched-die-molding).

13. Procédé selon l'une des revendications précédentes, **caractérisé en ce qu'**une, plusieurs ou toutes les couches de l'élément de base sont fixées dans un ou plusieurs cadres au chargement dans l'outil de formage.

14. Procédé selon l'une des revendications précédentes, **caractérisé en ce qu'**une, plusieurs ou toutes les couches de l'élément de base sont posées sur une structure tissée ou sur plusieurs fils, notamment sur des fils fibreux, au chargement dans l'outil de formage.

15. Procédé selon la revendication 14, **caractérisé en ce que** la structure tissée ou les fils sont composés de fibres de verre, de fibres métalliques ou de fibres synthétiques, notamment de PTFE.

16. Procédé selon la revendication 14 ou 15, **caractérisé en ce que** la structure tissée ou les fils sont ou seront prétraités afin d'améliorer l'adhérence.

17. Procédé selon l'une des revendications 14 à 16, **caractérisé en ce que** la structure tissée ou les fils sont ou seront fabriqués selon le procédé de commingling.

18. Procédé selon l'une des revendications précédentes, **caractérisé en ce qu'**une, plusieurs ou toutes les couches de l'élément de base sont fixées et transportées à l'aide d'épingles avant ou au chargement dans l'outil de formage.

19. Procédé selon l'une des revendications précédentes, **caractérisé en ce que** dans le cas de l'élément de base, il s'agit d'une matière composite qui présente au moins une couche présentant une structure réticulaire ou alvéolaire et **en ce que** le façonnage de cette couche s'effectue avec d'autres couches du composant en matière composite à une pression maximale de 50 bar, s'élevant de préférence de 20 bar à 30 bar.

20. Procédé selon l'une des revendications précédentes, **caractérisé en ce que** le façonnage de la matière synthétique thermoplastique ou duroplastique s'effectue à une pression maximale de 250 bar.

21. Procédé selon l'une des revendications précédentes, **caractérisé en ce que** les couches de l'élément de base se composent de polyamide, de polybutènetéréphtalate, de polyéthylène ou de polypropylène, ou bien de thermoplastiques à haute température tels que le PPS (polysulfure de phénylène) ou le PEI (polyétherimide), ou bien d'élastomères thermoplastiques (TPE).

22. Procédé selon l'une des revendications précédentes, **caractérisé en ce que** les couches de l'élément de base sont renforcées à la fibre de verre, à la fibre de carbone, à la fibre naturelle, à la fibre d'aramide, à la fibre métallique et/ou à la fibre synthétique.

23. Procédé selon l'une des revendications précédentes, **caractérisé en ce que** les couches de l'élément de base présentent des polymères autorenforcés ou **en ce qu'**elles se composent desdits polymères autorenforcés.

24. Procédé selon l'une des revendications précédentes, **caractérisé en ce que** dans le cas de l'élément de base, il s'agit d'une matière composite qui présente au moins une couche présentant une structure réticulaire ou alvéolaire, sachant que cette couche se compose des matières selon les revendications 21-23 ou qu'elle se compose de papier, de carton ou de métal, notamment d'aluminium.

25. Procédé selon l'une des revendications précédentes, **caractérisé en ce que** les plusieurs couches de l'élément de base sont façonnées par l'outil de formage de manière à ce que la séparation entre les matrices de l'outil de formage est couverte par les couches de l'élément de base, de sorte qu'aucune matière synthétique thermoplastique ou duroplastique ne puisse s'écouler dans l'élément de base.

26. Procédé selon l'une des revendications précédentes, **caractérisé en ce qu'**une, plusieurs ou toutes les couches de l'élément de base présentent au moins une zone de retenue, dans laquelle les couches sont fixées par un cadre ou un autre dispositif de retenue, sachant que les zones de retenue sont ajustées de sorte qu'elles soient façonnées avec la matière synthétique thermoplastique ou duroplastique.

27. Procédé selon la revendication 26, **caractérisé en ce que** la ou les zones de retenue présentent un ou plusieurs ajours, dans lesquels la matière synthétique thermoplastique ou duroplastique pénètre afin de créer une liaison mécanique.
